# EUROPÄISCHE PATENTSCHRIFT

(11) **EP 2 679 498 B1**
(45) Veröffentlichungstag und Bekanntmachung des Hinweises auf die Patenterteilung: **28.11.2018**
(21) Anmeldenummer: 13174024.3
(22) Anmeldetag: 27.06.2013
(51) Int. Cl.: B64D 11/06

(54) **Sitzanordnung mit längsverschiebbaren Sitzreihen**
Seat assembly with longitudinally adjustable rows of seats
Agencement de siège avec rangées de sièges déplaçables longitudinalement

(30) Priorität: 27.06.2012 DE 102012012686
(43) Veröffentlichungstag der Anmeldung: 01.01.2014
(73) Patentinhaber: Airbus Defence and Space GmbH, 85521 Ottobrunn (DE)
(72) Erfinder: Dipl. Ing. Rollfink, Patrick, 22765 Hamburg (DE); Pommers, Martins, 1013 Riga (LV)
(74) Vertreter: Isarpatent

(56) Entgegenhaltungen:
- WO-A1-82/00618
- DE-A1-102008 006 695
- DE-A1-102009 035 765
- US-A- 3 572 829

## Beschreibung

Die Erfindung betrifft eine Sitzanordnung für ein Fahrzeug mit einer Sitzstütze, die über ein Sitzfußgestell an einem Kabinenboden fixiert ist, wobei an der Sitzstütze mehrere Einzelsitze neben einander angebracht sind oder eine mehrere Sitze umfassende Sitzbank angebracht ist.

Aus der DE 10 2009 004 987 A1, US 5 871 318 A, US 5,871,318 oder der NL 1012287 C sind Anordnungen zum Verschieben von Sitzanordnungen entlang von im Kabinenboden eingelassenen Schienen bekannt, die es ermöglichen, den Sitzabstand zu verändern oder die Sitze zur Ausbildung eines größeren Frachtraumes zusammen zu schieben. Auf diese Weise ist es beispielsweise möglich, einen kleineren Sitzabstand, beispielsweise für die sog. "Economie"-Klasse, und einen größeren Sitzabstand, beispielsweise für die sog. "Business"-Klasse vorzusehen.
Nachteilig dabei ist, dass der Aufwand bei der Umrüstung relativ hoch ist und daher ein entsprechend hoher Zeitaufwand dabei entsteht, so dass solche Umrüstungen normalerweise nur über Nacht oder bei planmäßigen Checks durchgeführt werden können. Denn neben der rein mechanischen Umrüstung ist für jeden umgerüsteten Sitz und jedes einer Sitzreihe zugeordnete Passenger Service Chanel (PSC) ein zwingend vorgeschriebener Layout-Check erforderlich.
In der DE 10 2008 006 695 ist eine Anordnung zur Lageveränderung von Sitzreihen in einem Luftfahrzeug beschrieben, bei dem zwischen Sitzfußgestell und den Sitzen jeweils Sätze von beidendig angelenkten Streben vorgesehen sind, so dass die Sitze zwei hinsichtlich der Längsachse des Luftfahrzeugs beabstandete Positionen einnehmen können. Nachteilig dabei ist, dass Drehgelenke und Gelenkssperren baulich aufwändig ausgeführt werden müssen, um große Momente aufnehmen zu können.

Aufgabe der Erfindung ist es, in einem Fahrzeug eine vereinfachte und verkürzte Umrüstung des Sitzabstandes bei einem Teil der Fahrzeugsitze zu ermöglichen, Die Lösung dieser Aufgabe ergibt sich aus den Merkmalen des Anspruchs 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung eines Ausführungsbeispiels der Erfindung, das in den Figuren dargestellt ist.

Insbesondere wird die Aufgabe dadurch gelöst, dass die Sitzstütze mittels einer Translationsführung am Sitzfußgestell eine begrenzte Strecke von 8 bis 15 cm in Fahrzeuglängsrichtung verschiebbar ist, wobei die Translationsführung an ihren beiden Enden je eine Raststellung aufweist. Auf diese Weise können einzelne Sitzreihen um ein gewünschtes Maß, beispielsweise 3 oder 4 Zoll, nach vorne verschoben werden, so dass der Sitzabstand auf der Vorderseite der verschobenen Sitzreihe um dieses Maß verkleinert und der Sitzabstand auf der Rückseite entsprechend vergrößert ist. Beispielsweise bei einem voreingestellten Sitzabstand von 32 Zoll wird dann der Sitzabstand jeder zweiten Sitzreihe zu 32-3 = 29 Zoll und jeder dazwischen liegenden Sitzreihe 32+3 = 35 Zoll. Dabei bleibt der Abstand zwischen den Sitzfußgestellen unverändert. Dies hat den Vorteil, dass die Sitzfüße nicht mehr in der Sitzschiene gelöst werden müssen, so dass diese für die dynamischen Crash-Lasten optimierbar sind, also bei Bedarf fest mit der Bodenstruktur verbunden werden können. Beide Sitzlayouts (also das mit gleichem Sitzabstand von 32 Zoll für alle Sitze und das mit der Hälfte der Sitze mit 29 Zoll und der Hälfte mit 35 Zoll) können "verifiziert" sein und damit eine Änderung des Sitzlayouts während eines normalen ca. 30 minütigen Bodenaufenthalts mittels Kabinenpersonals durchführbar sein.Dabei weist die Translationsführung an ihren beiden Enden je eine Raststellung auf, zwischen denen die Sitzreihe nach vorne bzw. hinten verschiebbar ist. Dabei ist eine der beiden Raststellungen so ausgebildet, dass alle Sitze den gleichen Sitzabstand haben, sofern sich alle Translationsführungen in dieser Stellung befinden. Diese Anordnung ermöglicht zwei verschiedene Sitzanordnungen, zum einen ein gleichmäßiger Sitzabstand und zum zweiten alternierend ein größerer und ein kleinerer Sitzabstand, die sich um das doppelte des Abstandes zwischen den beiden Raststellungen unterscheiden.

Gemäß einer alternativen vorteilhaften Weiterbildung der Erfindung weist die Translationsführung 3 oder 4 beabstandete Raststellungen auf. Auf diese Weise können mehr als zwei alternative Sitzabstandsanordnungen vorgesehen werden. Wenn insbesondere zwischen den beiden Endstellungen eine zusätzliche Raststellung in der Mitte des Translationsbereichs vorgesehen wird, können bis zu vier verschiedene Sitzabstände vorgesehen werden. Denn jede zweite verschiebbare Sitzreihe auf die erste, mittlere Raststellung eingestellt wird (beispielsweise jeweils 2 Zoll von den Entstellungen entfernt bei einer Gesamtlänge des beweglichen Bereichs von 4 Zoll) würden beispielsweise bei einem Grundabstand von 32 Zoll die beiden Sitzreihen vor und hinter der bewegten Sitzreihen Sitzabstände von 30 bzw. 34 Zoll aufweisen. Wenn jede andere zweite verschiebbare Sitzreihe auf die zweite Endstellung von 4 Zoll verschoben wird, so erhalten die beiderseitigen Sitzreihen 28 bzw. 36 Zoll. Dabei muss jede zweite Sitzreihe unverändert bleiben. Es sind also gleichzeitig Sitzabstände von 28, 30, 34 und 36 Zoll möglich.
Gemäß einer vorteilhaften Weiterbildung der Erfindung weist die Translationsführung ein Schnellverschlusssystem auf. Damit lässt sich eine schnelle Ver- bzw. Entriegelung der Translationsführung erreichen. Es könnte eine Anordnung beispielsweise ähnlich der US 3,392,954 Anwendung finden. Normalerweise wird die Translationsführung unterhalb der Sitzstütze, also für die Passagiere unsichtbar, angeordnet sein.
Vorzugsweise sind die Schnellverschlusssysteme einer Sitzanordnung durch eine gemeinsame Betätigungseinrichtung ver- bzw. entriegelbar. Damit lässt sich die Verstellung der Sitzbänke noch weiter vereinfachen bzw. beschleunigen.
Gemäß einer vorteilhaften Weiterbildung der Erfindung weist das Sitzfußgestell mindestens zwei am Kabinenboden befestigte Vertikalstützen auf, an deren oberen Enden die gestellseitigen Teile von zwei Translationsführungen angeordnet sind. Diese Anordnung ermöglicht eine unkomplizierte Verstellung. Beispielsweise bei einer typischen Anordnung von 3 Sitzen neben einander würden die Rastanordnungen der beiden Translationsführungen zu betätigen sein.
Vorteilhafterweise wird die erfindungsgemäße Sitzanordnung in einem Luftfahrzeug verwendet, denn dort besteht ein Bedarf nach schneller Umstellung des Sitzabstandes. Gerade in Verbindung mit modernen Flugzeugsitzbänken, die relativ einfach von 3 schmalen auf 2 breitere Sitze mit Zwischenablage umrüstbar sind, ergibt sich ein vorteilhafter Einsatz der erfindungsgemäßen Anordnung, weil eine Sitzkonstellation mit zwei Sitzen und Zwischenablage kaum als wertigerer Sitzplatz teurer verkauft werden kann, wenn nicht gleichzeitig der Sitzabstand entsprechend zur Vergrößerung des Komforts erhöht wird.
Gemäß einer vorteilhaften Ausbildung der Erfindung wird ein Luftfahrzeug mit einer Anzahl von Reihen in Fahrzeuglängsrichtung hinter einander angeordneter Sitzanordnungen vorgeschlagen, bei dem mindestens jede zweite Sitzanordnung nach einem oder mehreren der Ansprüche 1 bis 4 ausgebildet ist. Demgegenüber ist jede andere zweite Sitzanordnung wie herkömmlich ausgebildet. Alternativ ist es auch möglich, alle Sitzanordnungen entsprechend auszubilden, um einen noch größeren Freiraum der Einstellung unterschiedlicher Sitzabstände bereitzustellen.

Weitere Vorteile, Merkmale und Einzelheiten ergeben sich aus der nachfolgenden Beschreibung, in der - unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung. Gleiche, ähnliche und/oder funktionsgleiche Teile sind mit gleichen Bezugszeichen versehen.

Es zeigen:
- Figur 1a:: eine schematische Anordnung von Sitzanordnungen in einer ersten Konstellation mit überall gleichem Sitzabstand;
- Figur 1b:: eine schematische Anordnung von Sitzanordnungen in einer zweiten Konstellation mit zwei alternierend gleichen Sitzabständen;
- Figur 2:: ein schematischer Ausschnitt einer Frontansicht einer Sitzanordnung ;
- Figur 3:: eine schematische perspektivische Ansicht der Translationsführung von unten.

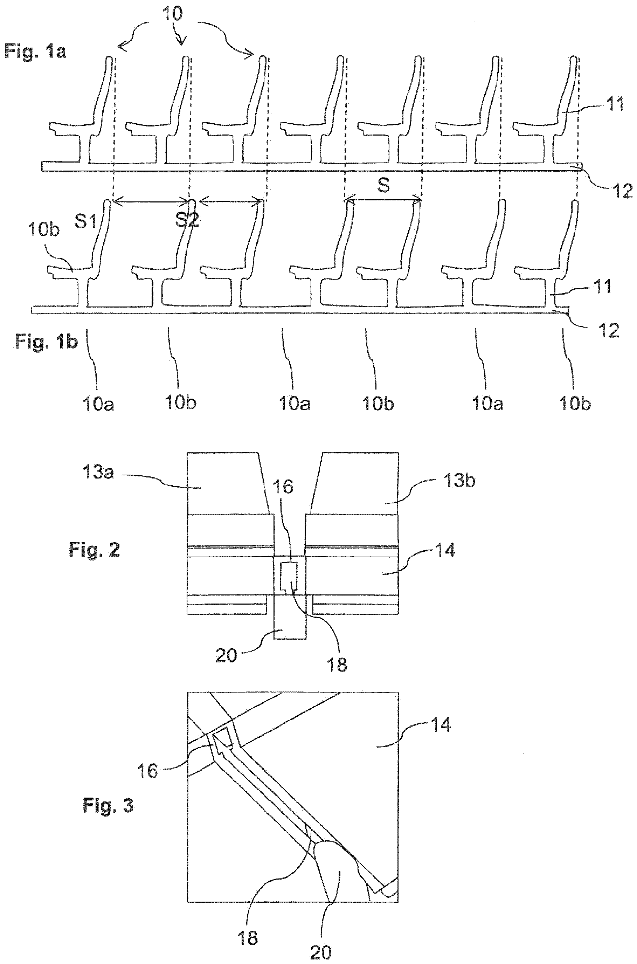

In den Figuren 1a und 1b sind schematisch zwei Sitzreihenanordnungen in einem Flugzeug dargestellt, die jeweils aus einer Anzahl von Sitzreihen 10 bestehen, welche jeweils mehrere (meist 2 oder 3) neben einander angeordnete Sitze aufweisen. Die Sitzreihen 10 sind über Sitzstützen 11 an einem Kabinenboden 12 fixiert.

In der Anordnung gemäß **Figur 1a** haben alle Sitzreihen 10 den gleichen Sitzabstand S, beispielsweise von 32 Zoll.

**Figur 1b** zeigt eine Anordnung, bei der jede zweite Sitzreihe 10a nach hinten verschoben wurde und damit zur jeweils davor liegenden Sitzreihe 10b einen größeren Sitzabstand S1 und zu der jeweils dahinter liegenden Sitzreihe 10b einen kleineren Sitzabstand S2 aufweist. Insbesondere wenn der Verstellbereich 3 Zoll beträgt, so beträgt S1 = 35 Zoll und S2 = 29 Zoll.

In **Figur 2** ist schematisch ein Ausschnitt der Frontalansicht einer Sitzanordnung 10 dargestellt. Diese umfasst zwei neben einander angeordnete Sitze 13a, 13b, die an einer Sitzstütze 14 angebracht sind. Diese Sitzstütze 14 umfasst eine Führungsschiene 16, welche einen Schieber 18 umgreift, der mit einer zwischen den beiden Sitzen 13a, 13b vom Kabinenboden sich erstreckenden Vertikalstütze 20 eines Sitzfußgestells verbunden ist. Die Schnellverschlusseinrichtung ist dabei nicht dargestellt.

**Figur 3** zeigt eine schematische perspektivische Ansicht der Translationsführung 16, 18 von unten, bei der die Vertikalstütze 20 mit dem Schieber 18 in der Führungsschiene 16 dargestellt ist.

## Patentansprüche

1. Luftfahrzeug mit mehreren Reihen von in Fahrzeuglängsrichtung hinter einander angeordneten Sitzanordnungen, wobei jede Sitzanordnung eine Sitzstütze (14) aufweist, die über ein Sitzfußgestell (11) an einem Kabinenboden (12) fixiert ist, **dadurch gekennzeichnet, dass** eine Anzahl an Sitzstützen (14) mittels einer Translationsführung (16, 18) am Sitzfußgestell (11) eine begrenzte Strecke von 8 - 15 cm in Fahrzeuglängsrichtung verschiebbar ist, wobei die Translationsführung (16, 18) an ihren beiden Enden je eine Raststellung aufweist und wobei Sitzstützen (14) mit jeweils einer Translationsführung (16, 18) mit Sitzstützen ohne Translationsführung (16, 18) in Fahrzeuglängsrichtung alternieren.

2. Luftfahrzeug nach Anspruch 1, **dadurch gekennzeichnet, dass** die Translationsführung (16, 18) 3 oder 4 beabstandete Raststellungen aufweist.

3. Luftfahrzeug nach einem der vorherigen Ansprüche, **dadurch gekennzeichnet, dass** die Translationsführung (16, 18) ein Schnellverschlusssystem aufweist.

4. Luftfahrzeug nach Anspruch 3, **dadurch gekennzeichnet, dass** die Schnellverschlusssysteme einer Sitzanordnung (10) durch eine gemeinsame Betätigungseinrichtung ver- bzw. entriegelbar ist.

5. Luftfahrzeug nach einem der vorherigen Ansprüche, **dadurch gekennzeichnet, dass** das Sitzfußgestell (11) mindestens zwei Vertikalstützen (20) aufweist, an deren oberen Enden die gestellseitigen Teile von zwei Translationsführungen (16, 18) angeordnet sind.

## Claims

1. Aircraft having a plurality of rows of seat assemblies arranged one behind another in the vehicle longitudinal direction, each seat assembly having a seat support (14) which is fixed to a cabin floor (12) via an a seat base frame (11), **characterized in that** a number of seat supports (14) are displaceable by means of a translation guide (16, 18) on the seat base frame (11) by a limited distance of 8 - 15 cm in the vehicle longitudinal direction, wherein the translation guide (16, 18) has a latching position each at its two ends, and wherein seat supports (14) each having a translation guide (16, 18) alternate with seat supports without a translation guide (16, 18).

2. Aircraft according to Claim 1, **characterized in that** the translation guide (16, 18) has 3 or 4 spaced latching positions.

3. Aircraft according to one of the preceding claims, **characterized in that** the translation guide (16, 18) has a quick-release fastening system.

4. Aircraft according to Claim 3, **characterized in that** the quick-release fastening systems of a seat assembly (10) can be locked and unlocked by a common actuating device.

5. Aircraft according to one of the preceding claims, **characterized in that** the seat base frame (11) has at least two vertical supports (20), at the upper ends of which the frame-side parts of two translation guides (16, 18) are arranged.

## Revendications

1. Aéronef comprenant plusieurs rangées d'agencements de sièges disposés les uns derrière les autres dans la direction longitudinale de l'appareil, chaque agencement de siège présentant un support de siège (14) qui est fixé sur un plancher de la cabine (12) par le biais d'un bâti de pied de siège (11), **caractérisé en ce qu'**une pluralité de supports de siège (14) peuvent être déplacés au moyen d'un guidage en translation (16, 18) sur le bâti de pied de siège (11) sur une distance limitée de 8-15 cm dans la direction longitudinale de l'appareil, le guidage en translation (16, 18) présentant au niveau de ses deux extrémités une position d'encliquetage respective et les supports de siège (14) avec un guidage en translation respectif (16, 18) alternant dans la direction longitudinale du véhicule avec des supports de siège sans guidage en translation (16, 18).

2. Aéronef selon la revendication 1, **caractérisé en ce que** le guidage en translation (16, 18) présente 3 ou 4 positions d'encliquetage espacées.

3. Aéronef selon l'une quelconque des revendications précédentes, **caractérisé en ce que** le guidage en translation (16, 18) présente un système de fermeture rapide.

4. Aéronef selon la revendication 3, **caractérisé en ce que** les systèmes de fermeture rapide d'un agencement de siège (10) peuvent être verrouillés ou déverrouillés par un dispositif d'actionnement commun.

5. Aéronef selon l'une quelconque des revendications précédentes, **caractérisé en ce que** le bâti de pied de siège (11) présente au moins deux supports verticaux (20) au niveau des extrémités supérieures desquels sont disposées les parties côté bâti de deux guidages en translation (16, 18) .
